# EUROPEAN PATENT APPLICATION

(11) **EP 1 557 292 A1**
(43) Date of publication of application: **27.07.2005**
(21) Application number: 04250273.2
(22) Date of filing: 20.01.2004
(51) Int. Cl.: B60B 21/06

(54) **Bicycle wheel rim with holes formed in sidewalls for passage of spoke fasteners**

(71) Applicant: Alex Global Technology Inc., Shan-Shang-Hsiang, Tainan Hsein (TW)
(72) Inventor: Chen, Chao-Ying, Shan-Shang Hsiang Tainan Hsein (TW)
(74) Representative: Rees, Alexander Ellison

(57) **Abstract**

A bicycle wheel rim (2) includes two annular sidewalls (21), an annular connecting wall (24) interconnecting intermediate portions (213) of the sidewalls (21), and an annular outer rim wall (22) interconnecting inner peripheral portions (211) of the sidewalls (21). A plurality of fastener mounting holes (23) are formed through the outer rim wall (22). A plurality of spoke fasteners (13) can be moved into the fastener mounting holes (23) in the outer rim wall (22) through a plurality of fastener passage holes (25) in the sidewalls (21) to engage a plurality of spokes (12), respectively, so as to interconnect the spokes (12) and the spoke fasteners (13) fixedly.

## Description

This invention relates to a bicycle wheel rim for mounting a bicycle tire without an inner tire body, and more particularly to a bicycle wheel rim that includes two annular side walls, each of which is formed with holes for passage of spoke fasteners therethrough.

A conventional bicycle includes a plurality of spoke units interconnecting a hub and a wheel rim. Each of the spoke units has a spoke and a spoke fastener that is mounted on the wheel rim and that is connected threadedly to the spoke. A bicycle tire which does not have any inner tire body has been proposed heretofore for mounting on a bicycle wheel rim. However, the hub, the spokes, and the spoke fasteners of a conventional bicycle that has tires with inner tire bodies cannot be used in a bicycle with tires that do not have inner tire bodies.

Therefore, the object of this invention is to provide a bicycle wheel rim that can overcome the drawback associated with the above-mentioned conventional bicycle wheel rim.

According to this invention, a bicycle wheel rim is adapted for connection with an inflatable bicycle tire and a spoke unit. The spoke unit includes a plurality of spokes and a plurality of spoke fasteners. Each of the spokes has a radial inner end attached fixedly to a hub, and a radial outer end. Each of the spoke fasteners has an enlarged radial outer end and a radial inner end that engages the radial outer end of a respective one of the spokes. The wheel rim includes two annular sidewalls, each of which has an inner peripheral portion, an outer peripheral portion, an intermediate portion disposed between the inner and outer peripheral portions, and a plurality of fastener passage holes that are formed through a corresponding one of the sidewalls, that are located between the intermediate portion and the inner peripheral portion, and that are sized to permit corresponding ones of the spoke fasteners to move respectively therethrough during assembly. An annular connecting wall interconnects the intermediate portions of the sidewalls, and cooperates with the sidewalls to define a tire retaining space thereamong, which is adapted for retaining the bicycle tire. An annular outer rim wall interconnects the inner peripheral portions of the sidewalls, and is formed with a plurality of spoke mounting holes therethrough, which are adapted for insertion of the spoke fasteners, respectively, such that the enlarged radial outer ends of the spoke fasteners abut against the outer rim wall. The fastener mounting holes in the outer rim wall are positioned respectively relative to the fastener passage holes in the sidewalls such that the spoke fasteners can be moved respectively into the fastener mounting holes in the outer rim wall through the fastener passage holes in the sidewalls during assembly.

These and other features and advantages of this invention will become apparent in the following detailed description of the preferred embodiments of this invention, with reference to the accompanying drawings, in which:
Fig. 1 is a sectional view of the first preferred embodiment of a bicycle wheel rim according to this invention;
Fig. 2 is a fragmentary perspective view of the first preferred embodiment;
Fig. 3 is a schematic cross sectional view of the first preferred embodiment, illustrating how a spoke fastener is moved through a fastener passage hole in a sidewall;
Fig. 4 is a schematic cross sectional view of the first preferred embodiment, illustrating how the spoke fastener is connected threadedly to a spoke; and
Fig. 5 is a fragmentary perspective view of the second preferred embodiment of a bicycle wheel rim according to this invention.

Before the present invention is described in greater detail in connection with the preferred embodiments, it should be noted that similar elements and structures are designated by like reference numerals throughout the entire disclosure.

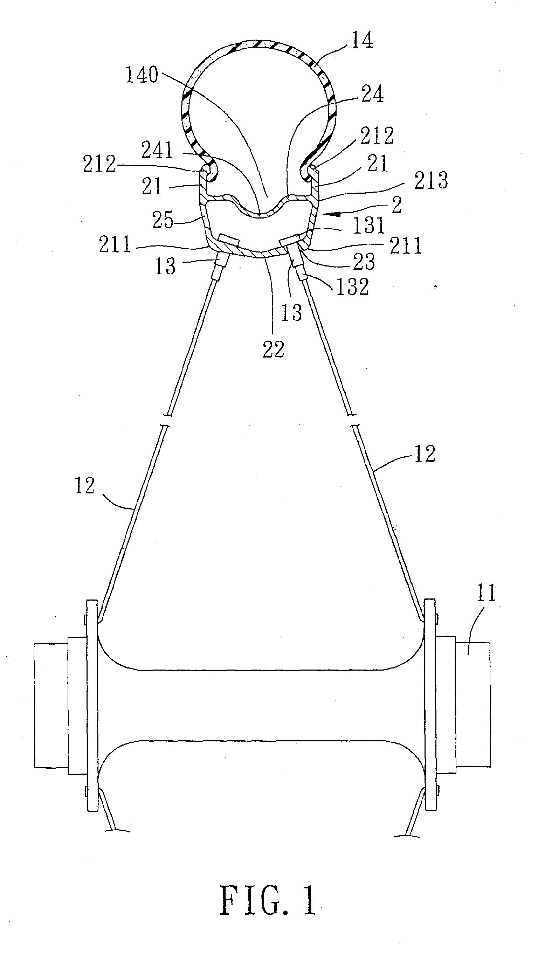

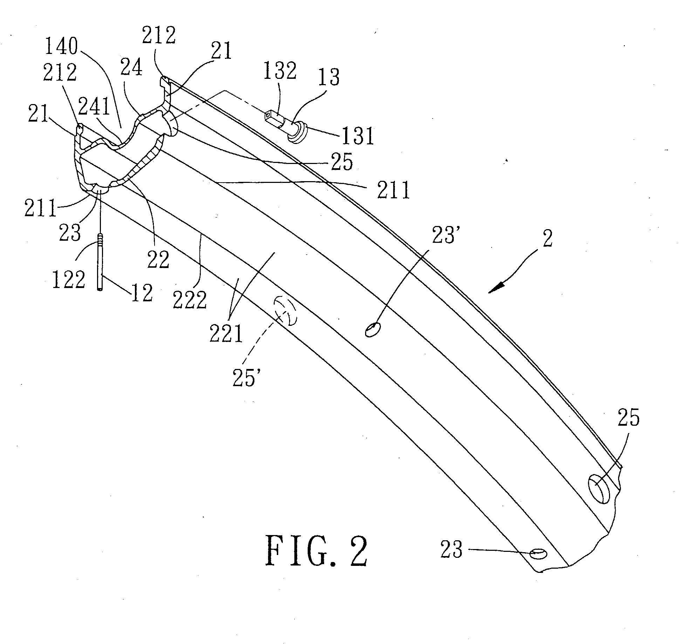

Referring to Figs. 1, 2, 3, and 4, the first preferred embodiment of a bicycle wheel rim 2 according to this invention is shown to include two annular sidewalls 21, an outer rim wall 22 that has two circumferential rows of fastener mounting holes 23 formed inclinedly therethrough, and an annular connecting wall 24. Each of the sidewalls 21 has a plurality of fastener passage holes 25 formed inclinedly therethrough. The fastener passage holes 25 in one of the sidewalls 21 are deflected from those in the other one of the sidewalls 21 along an axial direction of a hub 11. The bicycle wheel rim 2 is connected to a U-shaped-cross-sectioned inflatable bicycle tire 14 and a spoke unit that includes a plurality of spokes 12 and a plurality of spoke fasteners 13. Each of the spokes 12 has a hook-shaped radial inner end 121 attached to the hub 11, and an externally threaded radial outer end 122. Each of the spoke fasteners 13 has an enlarged radial outer end 131 and an internally threaded radial inner end 132 that engages the externally threaded radial outer end 122 of the corresponding spoke 12.

Each of the sidewalls 21 has an inner peripheral portion 211, an outer peripheral portion 212, and an intermediate portion 213 disposed between the inner and outer peripheral portions 211, 212. The fastener passage holes 25 are located between the intermediate portions 213 and the inner peripheral portions 211, and are sized to permit the spoke fasteners 13 to move respectively therethrough.

The connecting wall 24 interconnects the intermediate portions 213 of the sidewalls 21, and cooperates with the sidewalls 21 to define a tire retaining space 140 thereamong, which is adapted for retaining the bicycle tire 14.

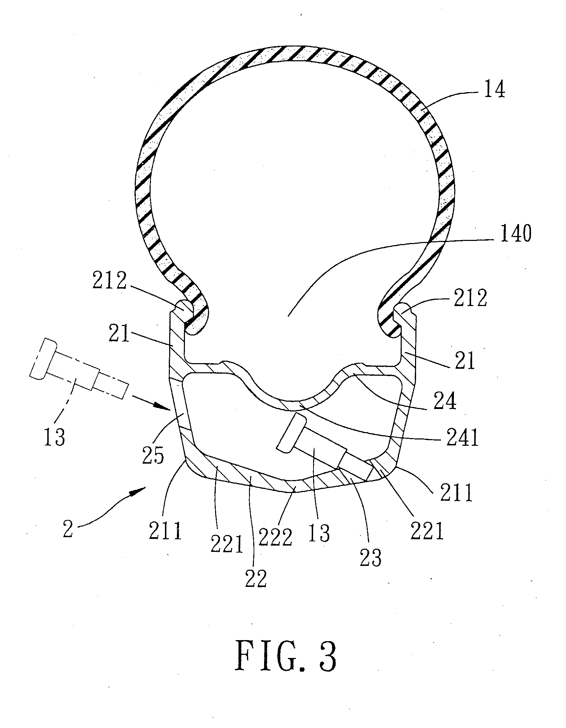

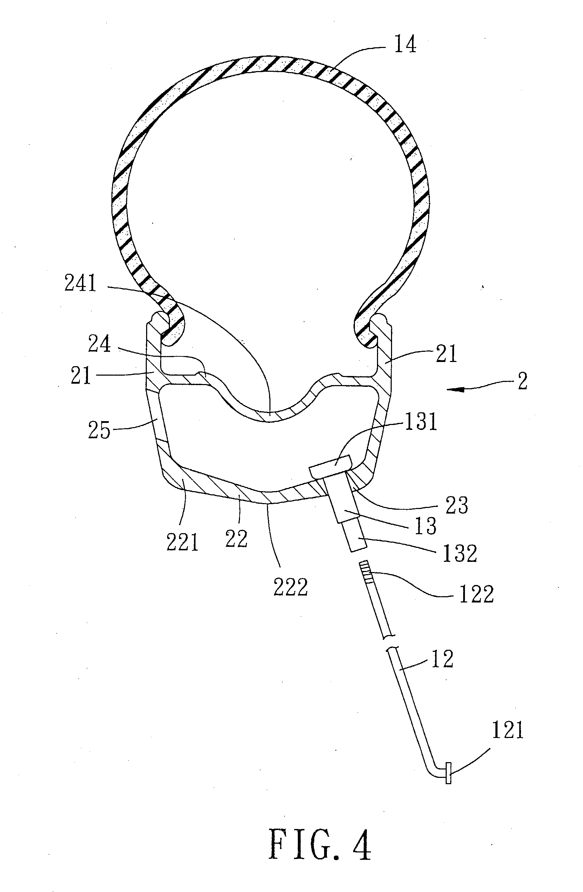

The outer rim wall 22 interconnects the inner peripheral portions 211 of the sidewalls 21, and has two opposite side portions 221 that are formed respectively with the sidewalls 21, and a middle portion 222 that interconnects the side portions 221. The fastener mounting holes 23 are formed in the side portions 221 of the outer rim wall 22. The side portions 221 of the outer rim wall 22 are thicker than the middle portion 222 of the outer rim wall 22 so as to reinforce the outer rim wall 22. Each of the fastener passage holes 25 in the sidewalls 21 extends toward an end of the corresponding fastener mounting hole 23 in the outer rim wall 22, into which the corresponding spoke fastener 14 is inserted. Each of the fastener mounting holes 23 is disposed at one of the side portions 221 of the outer rim wall 22, which is adjacent to one of the sidewalls 21, while a corresponding one of the fastener passage holes 25 in the sidewalls 21 is disposed at the other one of the sidewalls 21. For example, in a pair of the fastener mounting hole 23 and the fastener passage hole 25 that are associated with each other, when the fastener mounting hole 23 is disposed at the right side portion 221 of the outer rim wall 22, the fastener passage hole 25 is disposed at the left sidewall 21, as shown in Fig. 3. The fastener mounting holes 23 in one of the side portions 221 of the outer rim wall 22 are deflected from those in the other one of the side portions 221 of the outer rim wall 22 along the axial direction of the hub 11. The spoke fasteners 13 are inserted respectively through the fastener mounting holes 23 in the outer rim wall 22. The enlarged radial outer ends 131 of the spoke fasteners 13 abut against the outer rim wall 22. The internally threaded radial inner ends 132 of the spoke fasteners 13 engage respectively the outer threaded radial outer ends 122 of the spokes 12. As such, during assembly, each of the spoke fasteners 23 can be clamped by a tool (not shown) and moved into the corresponding fastener mounting hole 23 in the outer rim wall 22 through the corresponding fastener passage hole 25 in the corresponding sidewall 21, as shown in Figs. 3 and 4. The connecting wall 24 has a concaved and curved middle portion 241 that is concaved toward the outer rim wall 22 so as to guide the spoke fasteners 13 to move respectively into the fastener mounting holes 23 in the outer rim wall 22 during assembly.

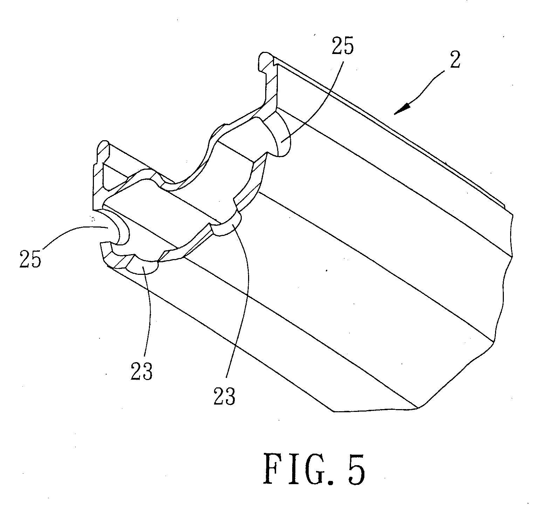

The arrangement of the fastener mounting holes 23 and the fastener passage holes 25 can be changed. For example, referring to Fig. 5, when the bicycle rim 2 is made of a material that has a comparatively high strength, the fastener passage holes 25 in the left sidewall 21 can be aligned respectively with those in the right sidewall 21 along the axial direction of the hub 11.

## Claims

1. A bicycle wheel rim (2) adapted for connection with an inflatable bicycle tire (14) and a spoke unit, the spoke unit including a plurality of spokes (12) and a plurality of spoke fasteners (13), each of the spokes (12) having a radial inner end (121) attached to a hub (11), and a radial outer end (122), each of the spoke fasteners (13) having an enlarged radial outer end (131) and a radial inner end (132) that engages the radial outer end (122) of a respective one of the spokes (12), the wheel rim (2) being **characterized by**:
two annular sidewalls (21), each of which has an inner peripheral portion (211), an outer peripheral portion (212), an intermediate portion (213) disposed between the inner and outer peripheral portions (212), and a plurality of fastener passage holes (25) that are formed through a corresponding one of the sidewalls (21) , that are located between the intermediate portion (213) and the inner peripheral portion (211), and that are sized to permit corresponding ones of the spoke fasteners (13) to move respectively therethrough during assembly;
an annular outer rim wall (22) interconnecting the inner peripheral portions (211) of the sidewalls (21) and formed with a plurality of spoke mounting holes (23) therethrough, which are adapted for insertion of the spoke fasteners (13), respectively, such that the enlarged radial outer ends (131) of the spoke fasteners (13) abut against the outer rim wall (22), the fastener mounting holes (23) in the outer rim wall (22) being positioned respectively relative to the fastener passage holes (25) in the sidewalls (21) such that the spoke fasteners (13) can be moved respectively into the fastener mounting holes (23) in the outer rim wall (22) through the fastener passage holes (25) in the sidewalls (21) during assembly; and
an annular connecting wall (24) interconnecting the intermediate portions (213) of the sidewalls (21) and cooperating with the sidewalls (21) to define a tire retaining space (140) thereamong, which is adapted for retaining the bicycle tire (14).

2. The bicycle wheel rim (2) as claimed in Claim 1, **characterized in that** the connecting wall (24) has a concaved and curved middle portion (241) that is concaved toward the outer rim wall (22) so as to guide the spoke fasteners (13) to move respectively into the fastener mounting holes (23) in the outer rim wall (22) during assembly.

3. The bicycle wheel rim (2) as claimed in Claim 1, **characterized in that** the outer rim wall (22) has two opposite side portions (221) that are formed respectively with the sidewalls (21), the fastener mounting holes (23) being arranged in two circumferential rows, each of the fastener mounting holes (23) being disposed at a corresponding one of the side portions (221) of the outer rim wall (22), which is adjacent to one of the sidewalls (21), while a corresponding one of the fastener passage holes (25) is formed through the other one of the sidewalls (21).

4. The bicycle wheel rim (2) as claimed in Claim 3, further **characterized in that** each of the fastener passage holes (25) is formed inclinedly through the corresponding one of the sidewalls (21), and the fastener mounting holes (23) are formed inclinedly through the outer rim wall (22).

5. The bicycle wheel rim (2) as claimed in Claim 3, further **characterized in that** each of the fastener passage holes (25) in the sidewalls (21) extends toward an end of a corresponding one of the fastener mounting holes (23) in the outer rim wall (22), into which a corresponding one of the spoke fasteners (13) is inserted.

6. The bicycle wheel rim (2) as claimed in Claim 3, further **characterized in that** the outer rim wall (22) further has a middle portion (222) interconnecting the side portions (221) and being thinner than the side portions (221).

7. The bicycle wheel rim (2) as claimed in Claim 3, further **characterized in that** the fastener passage holes (25) in one of sidewalls (21) are deflected from the fastener passage holes (25) in the other one of sidewalls (21) along the axial direction of the hub (11).

8. The bicycle wheel rim (2) as claimed in Claim 3, further **characterized in that** the fastener passage holes (25) in one of the sidewalls (21) are aligned respectively with the fastener passage holes (25) in the other one of the sidewalls (21) along the axial direction of the hub (11).
